# EUROPEAN PATENT APPLICATION

(11) **EP 4 035 889 A1**
(43) Date of publication of application: **03.08.2022**
(21) Application number: 22152620.5
(22) Date of filing: 21.01.2022
(51) Int. Cl.: B32B 7/027, B32B 3/06, B32B 3/08, B32B 5/02, B32B 7/12, B32B 9/00, B32B 15/04, B32B 15/20

(54) **SYSTEM FOR THE THERMAL INSULATION OF AN ENGINE COMPARTMENT BY MEANS OF THE USE OF COMPOSITE MATERIALS**

(30) Priority: 28.01.2021 IT 202100001727
(71) Applicant: Sapa S.p.A., 20144 Milano (MI) (IT)
(72) Inventor: AFFINITA, Antonio, I-80121 NAPOLI (NA) (IT)
(74) Representative: Fiammenghi, Eva

(57) **Abstract**

System for the thermal insulation of an engine compartment by means of the use of composite materials comprising a plurality of carbon panels (10) with a thickness that varies from 5 to 2 millimeters on which aluminum sheets (11) are applied, by means of gluing, with a thickness that varies from 0.5 to 1 millimeter each, thus originating a sandwich membrane that constitutes the thermal insulating panel (20); said system comprising:
- a plurality of joints (12) on the edges of each carbon panel (10);
- a plurality of gaskets (15) resistant to high temperatures, adapted to maintain the thermal insulation also at the joints of the different panels (20);
- a plurality of buttons (13), adapted for modulating said thermal insulation system, ensuring the possibility of adding multiple panels;
- at least a label;
- at least a code which specifies the position that the present thermal insulating panel (20) must have.

## Description

### Field of the art

The invention operates in the scope of thermal insulating materials, in particular in the field of automobiles. More in detail the present invention proposes a new and innovative material for protection from heat generated by the single-piece of the engine during combustion or during any one operating step.

### Prior art

In the field of automobiles, the search for new materials and, in particular, new polymers, is always at the forefront due to increasing market needs. Both clients, and international laws, have for years pushed automobile manufacturers to constantly innovate the materials in order to provide maximum technical performances, maintaining respect for the environment and the costs low.

Among the most important features that determine consumer preference, there are no doubt the comfort conditions of the passenger compartment, which thus must not feel the heat coming from the engine nor the heat coming from the discharge manifolds and from the muffler itself. In order to ensure the correct climate conditions within the vehicle, numerous materials have been developed that act as thermal insulations.

The thermal insulation materials are generally situated in the vehicles, in proximity to the engine and to the engine compartment so as to ensure the comfort within the passenger compartment notwithstanding the high produced temperatures.

The problem pertaining to this type of elements constituting the vehicle lies in the fact that the optimal characteristics are obtained by the combination of the mechanical and thermal properties of multiple materials.

When multiple materials are arranged in layers, there is the risk of detachment of the different layers. Analogously, when a more rigid material is coupled to a less rigid material, one can observe a crushing of this second material, with consequent loss of the requested performances.

Several international patents regard this type of components of the vehicles, such as for example the patent of Korean origin and extended at the worldwide level WO 2016 190 596. Such patent regards a polyketone fiber material obtaining via centrifuging of the copolymer, washing, drying and stretching. The polyketone fiber has excellent properties of resistance to mechanical stresses, elongation, resistance to water, resistance to heat and heat conductivity and allows the production of objects that are highly resistant not only to high temperatures but even bulletproof.

Even if the quality of the object thus produced is high, this - due to the high production cost - is used for tanks and other military equipment, while it is disadvantageous for more massive productions.

The object of the patent is therefore that of providing a thermal insulation system adapted to ensure the necessary comfort to the passengers of the vehicle by means of the use of composite materials.

### Description of the invention

According to the present invention, a thermal insulation system is attained by means of the use of composite materials which effectively resolves the abovementioned problems.

The innovative thermal insulation system provides for coupling two materials that are different from each other so as to compose a membrane defined "sandwich", with the objective of obtaining a material with greater thermal insulating capacities.

Such effect is obtained by coupling, to a carbon panel with a thickness that varies from 2 to 5 millimeters, an aluminum sheet with a thickness comprised between 0.5 and 1 millimeter. When these two elements are combined together, by means of gluing, both the materials increase their thermal resistance. In particular the carbon panel has the object of insulating the passenger compartment from the engine compartment, protecting it from high temperatures; the aluminum sheet is instead adapted to reflect the heat emitted by the engine and to disperse the heat over the entire surface of the thermal insulating material, avoiding the constant stressing of the same points.

The thermal insulation system must follow the form of the engine compartment, comprising therefore a plurality of thermal insulating panels. Said panels are coupled to each other by means of compatible joints, positioned on the external edges.

In order to facilitate the coupling of the panels adjacent to each other, a Velcro can be used that is adapted to fix the position of said panels.

Once the thermal protection of the engine compartment is composed, by means of coupling multiple panels, the poor insulating capacity of the joints is evident; in other words, of the empty spaces created by the joining of multiple thermal insulating panels. In order to overcome this problem, it is provided to use suitable gaskets that are resistant to high temperatures. The thermal insulation system also provides for the possibility to be modulated, hence provide for an additional reinforcement at the most-stressed points. The effect is obtained due to a plurality of buttons present on the external edges of each panel, adapted to be coupled with further reinforcement panels, thus obtaining a plurality of layers at the most-stressed points. In one embodiment thereof, the buttons are substituted by metallic hinges adapted to render the joint between the two thermal insulating panels more hermetic.

Each thermal insulating panel has unique dimensions so as to meet the requirements of thermal insulation in the best ways possible. The more-stressed zones are of course those with the largest sizes.

A label is suitably engraved on the carbon panel for the purpose of providing the size characteristics of the panel, such as the thickness and the thermal transmittance.

In one embodiment thereof, said label is printed and glued suitable on the external surface of the thermal insulating panel.

In order to facilitate the mounting on the thermal insulating structure, the operator is provided with a code engraved on said thermal insulating panel. Said code is adapted to provide a geometric indication so as to simplify the assembly of the entire thermal insulating system.

By way of a non-limiting example, the code is substituted by a QR code, engraved on the carbon panel, adapted to be scanned and processed by a suitable digital reader so as to provide a substantial aid to the operator in understanding the composition of the entire thermal insulating system.

Within said thermal insulating panels, a plurality of thermal sensors can be installed, so as to constantly monitor the temperature recorded outside the engine. Said information relative to the temperature is communicated directly to the driver of the transport vehicle.

Said thermal sensors are also able to record the quantity of heat absorbed by the thermal insulating panels, hence recommending the replacement thereof if the panels have been exposed for too long to overly high thermal exchanges.

The present invention is essential for separating the area dedicated for the passengers from the engine compartment or from a machine room. This is the case of road vehicles or sailboats which must ensure a high comfort to passengers even when the internal volumes of the transport vehicles are small.

The advantages offered by the present invention are evident in light of the description set forth up to now and will be even clearer due to the enclosed figures and to the detailed description.

### Description of the figures

The invention will be described hereinbelow in at least a preferred embodiment by way of a non-limiting example, with the aid of the enclosed figures, in which:

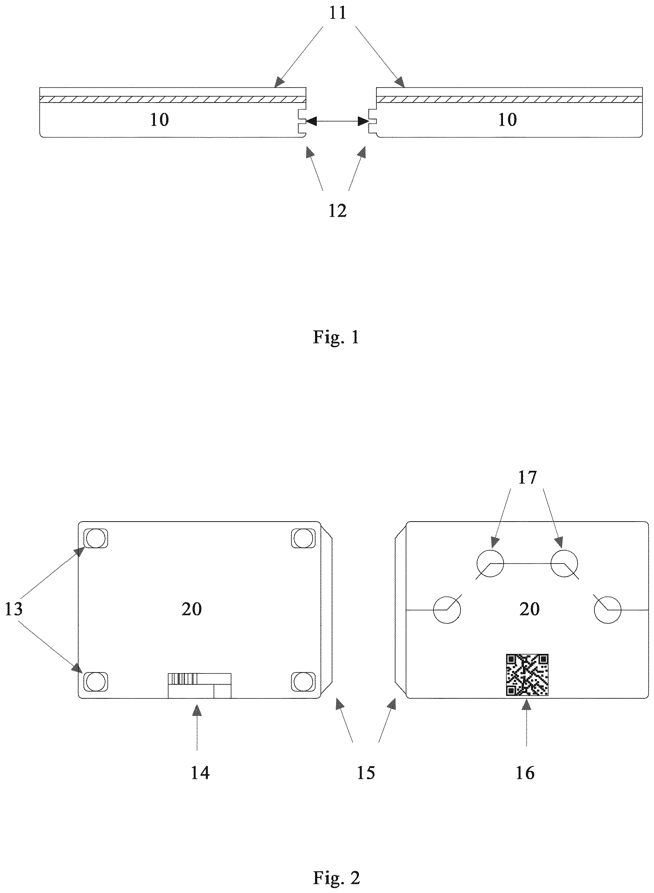

- FIGURE 1 shows a cross section of the thermal insulation system by means of the use of composite materials. In particular it is quite visible that the two thermal insulating panels 20 can be engaged with each other by means of the use of suitable joints 12 positioned on the lateral edges of the carbon panels 10.

On the upper top of each carbon panel 10, aluminum sheets 11 are applied that are adapted to reflect the heat and to diffuse it in a uniform manner over the entire thermal insulating surface. The carbon panel 10 thus takes on thermal insulating function while the aluminum sheet 11 takes on reflecting function for the system.
- FIGURE 2 shows a plan view of two possible embodiments of thermal insulating panel 20. In order to modulate the thermal insulation system, provision is made to use a plurality of buttons 13 adapted to facilitate the coupling of multiple thermal insulating panels 20 so as to increase the layers, and hence the thickness, in the zones most stressed by the heat.

A gasket 15 is present on the edges set for the coupling of the panels 20 so as to minimize the dispersion of heat due to the joint.

A label 14 is suitably engraved or printed in order to describe the thermal properties and the exact dimensions.

In order to facilitate the construction and the assembly of the thermal insulating panels 20, a code is engraved which, in one embodiment thereof, is in QR code form. Said code reports the geometric position of the panel 20 in order to facilitate the mounting thereof.

A plurality of temperature sensors 17 can be installed in order to monitor the external temperature of the engine apparatus, so as to inform the driver if the temperature reaches values that are outside the norm.

### Detailed description of the invention

The present invention will now be illustrated as a merely non-limiting or non-binding example, with reference to the figures which illustrate several embodiments relative to the present inventive concept.

With reference to FIG. 1, a cross section of said invention is illustrated, describing the manner in which two or more thermal insulating panels 20 are adapted to be engaged with each other. This is possible due to joints 12 positioned on the external edges of the carbon panels 10. Said carbon panels 10 constitute the base of said thermal insulating system. Each carbon panel has a thickness that varies from 5 to 2 millimeters.

The carbon, due to its physical characteristics, is adapted to effectively isolate the heat emitted by the engine. In order to render the entire system more effective, it is essential to apply an aluminum sheet 11 on the upper top of each carbon panel 10.

Said aluminum sheet 11, having a strong reflecting capacity, is adapted to disperse the heat in a uniform manner over the entire surface, thus avoiding to always stress the carbon parts that are most exposed to the thermal exchanges. The aluminum sheet 11 has a thickness that varies from 0.5 to 1 millimeter.

The coupling of aluminum and carbon consequently creates a membrane termed "sandwich" that is adapted to increase the thermal insulation, reducing the weights and the sizes that would characterize an old thermal insulation system.

In order to facilitate the coupling of two or more thermal insulating panels 20, a Velcro can be used, thus creating a slight superimposition of the panels 20.

With reference to FIG. 2, the gaskets 15 resistant to high temperatures are indicated, adapted to maintain the thermal insulation characteristics even at the joints of multiple panels 20.

In order to render the entire thermal insulation system modular, each thermal insulating panel 20 is provided with buttons 13 adapted to render the single panels 20 superimposable, thus creating multiple layers of thermal insulating material at the points where it is necessary to increase the thermal insulation.

An alternative to the buttons is given by a plurality of metallic hinges preferably positioned on the external edges of the thermal insulating panels 20.

A label 14 is preferably engraved on each panel 20 and provides the information relative to the size characteristics of said thermal insulating panel 20 and to its insulating capacities. Said label 14 is engraved in order to avoid bulk and possible cancelations, but in one embodiment thereof it can be printed and glued on the lower surface of the panel 20, i.e. on the side not exposed to the heat emitted by the engine compartment.

In order to facilitate the assembly of the innovative thermal insulation system, the operators are provided with a code, engraved on each single panel 20, adapted to describe the geometric position of each thermal insulating panel 20.

Said code, in one embodiment thereof, comprises a QR code 16 adapted to be read by a suitable digital reader, so as to show a three-dimensional design that can facilitate the understanding of the assembly system.

Within each thermal insulating panel 20, in one embodiment thereof, a plurality of temperature sensors 17 are installed, adapted to monitor the external temperature emanated by the engine. The information obtained from said sensors 17 is sent to the driver of the transport vehicle. Finally, it is clear that modifications, additions or variations can be made to the invention described up to now which are obvious for a man skilled in the art, without departing from the protective scope that is provided by the enclosed claims.

## Claims

1. System for the thermal insulation of an engine compartment by using composite materials **characterized in that** it comprises a plurality of carbon panels (10) having a thickness of between 2 mm and 5 mm, on which aluminum sheets (11) are applied, by means of gluing, having a thickness of between 0.5 mm and 1 mm each, thus originating a sandwich membrane constituting the thermal insulating panel (20); said system comprising:
- a plurality of carbon panels (10) constituting the thermal insulation necessary to insulate the heat of an engine compartment from the passenger compartment of a vehicle;
- a plurality of aluminum sheets (11), positioned on the top of the carbon panels (10) by means of gluing, adapted to reflect the heat emanated from the engine and to diffuse said heat in a constant way on the whole surface, so as to avoid always stressing the points most exposed to high temperatures;
- a plurality of joints (12) on the edges of each carbon panel (10), adapted to connect each thermal insulating panel (20) with the adjacent thermal insulating panel (20);
- a plurality of gaskets (15) resistant to high temperatures, adapted to maintain the thermal insulation also at the joints of the different panels (20);
- a plurality of buttons (13), placed on the external edges of the thermal insulating panels (20), adapted for modulating said thermal insulation system guaranteeing the possibility of adding multiple panels (20), creating multiple layers, at the points most affected by the thermal exchange;
- at least a label (14), engraved on said thermal insulating panel (20), adapted for providing information on the dimensional characteristics of said panel (20); said label (14) giving information on the thickness and thermal transmittance of said thermal insulating panel (20);
- at least a code, engraved on said thermal insulating panel (20), describing the geometry of the thermal insulation system, specifying the position that the thermal insulating panel (20) must have in relation to the engine compartment for which it has been designed.

2. System for the thermal insulation of an engine compartment by using composite materials, according to the preceding claim 1, **characterized in that** the joints (12) on the edges of each panel (20) are facilitated by a Velcro that keeps the panels (20) adjacent to each other.

3. System for the thermal insulation of an engine compartment by using composite materials, according to any one of the preceding claims, **characterized in that** a plurality of hinges of metal material, resistant to high temperatures, are used to modulate the said thermal insulation system.

4. System for the thermal insulation of an engine compartment by using composite materials, according to any one of the preceding claims, **characterized in that** said label (14) is printed and glued directly onto the external surface of the thermal insulation panel (20).

5. System for the thermal insulation of an engine compartment by using composite materials, according to any one of the preceding claims, **characterized in that** said code is shown by means of a QR code (16) in order to make reading by the operator clearer by means of a digital reading device showing the three-dimensional constructive scheme.

6. System for the thermal insulation of an engine compartment by using composite materials, according to any one of the preceding claims, **characterized in that** a plurality of temperature sensors (17) are included within each thermal insulating panel (20) for communicating to the driver of the vehicle the external temperature reached by the engine.

7. System for the thermal insulation of an engine compartment by using composite materials, according to the preceding claim 6, **characterized in that** said temperature sensors (17) are adapted for providing a history of use of the thermal insulating panels (20) and for recommending their replacement in case the absorbed temperatures have been excessive and too prolonged in time.

8. Use of a system for the thermal insulation of an engine compartment by using composite materials, according to any one of the preceding claims, in a road transport vehicle or on sailing or motor boats.
